# FASCICULE DE BREVET EUROPEEN

(11) **EP 2 606 415 B1**
(45) Date de publication et mention de la délivrance du brevet: **13.01.2021**
(21) Numéro de dépôt: 11749790.9
(22) Date de dépôt: 17.08.2011
(51) Int. Cl.: G06F 3/048, G06F 3/041

(54) **PROCEDE DE COMMANDE D'ACTIONS AU MOYEN D'UN ECRAN TACTILE**
VERFAHREN ZUR STEUERUNG VON AKTIONEN ANHAND EINES BERÜHRUNGSSCHIRMS
METHOD FOR CONTROLLING ACTIONS USING A TOUCH SCREEN

(30) Priorité: 17.08.2010 FR 1056630
(43) Date de publication de la demande: 26.06.2013
(73) Titulaire: Ingenico Group, 75015 Paris (FR)
(72) Inventeur: NACCACHE, David, F-75018 Paris (FR)
(74) Mandataire: Vidon Brevets & Stratégie
(86) Numéro de dépôt international: PCT/EP2011/064164
(87) Numéro de publication internationale: WO 2012/022769

(56) Documents cités:
- EP-A1- 1 942 401
- EP-A2- 1 852 774
- EP-A2- 1 881 396
- WO-A1-03/054681
- US-A1- 2007 247 435
- US-A1- 2010 097 332

## Description

### 1. Domaine de l'invention

L'invention concerne un procédé de commande d'un pointeur ayant une position déterminée par la position d'au moins une extrémité d'un membre sur un écran tactile.

De tels procédés sont couramment utilisés dans le domaine des interfaces pour dispositifs électroniques, tels des bornes de livraison de titres de transport ou encore des terminaux de paiement.

### 2. Art antérieur

Dans l'état actuel de la technique, la position du pointeur coïncide le plus souvent avec celle de l'extrémité agissant sur l'écran, qui est le plus souvent le bout d'un doigt.

Or, sur certains dispositifs devant présenter un encombrement réduit, tels en particulier les terminaux de paiement, l'écran tactile est de petite taille et les objets affichés sur cet écran peuvent présenter une surface très inférieure à la surface de contact entre le doigt et l'écran. Dans une telle situation, il est très difficile à un utilisateur du dispositif de discriminer entre deux objets voisins car il ne dispose pas d'un outil de pointage suffisamment précis pour ce faire, et l'utilisateur risque donc de sélectionner fréquemment des objets différents de ceux avec lesquels il aura voulu interagir *via* l'écran tactile.

Un tel manque de précision est aggravé par le fait que, à mesure que le doigt s'approche de l'écran, il masque de plus en plus la zone vers laquelle il se dirige et finit par recouvrir le ou les objets qui forment sa destination, de sorte que l'utilisateur doit alors piloter à l'aveugle l'entrée en contact de son doigt avec l'écran tactile, ce qui est une source supplémentaire d'erreurs de sélection.

Il est connu du document US 2007/247435 une technique de contrôle d'un pointeur sur un écran tactile qui rend plus aisée la sélection d'objets affichés sur un tel écran En particulier, le réglage de la distance d'un déport entre la position d'une extrémité d'un membre sur l'écran tactile et la position du pointeur est obtenu par la mesure d'une variation de distance séparant deux doigts simultanément présents sur l'écran tactile.

Une telle méthode est également connue des documents WO 03/054681 A1 et EP 1 881 396 A2.

Il est également connu du document US 2010/097332 une technique d'ajustement de paramètres d'une interface de type écran tactile, en utilisant divers mouvements relatifs exécutés à l'aide de deux doigts simultanément présents sur l'écran tactile.

En outre, il est connu du document EP 1 942 401 une technique de gestion de mouvements tactiles sur écran tactile permettant d'éditer et de manipuler des fichiers multimédia.

### 3. Objectifs de l'invention

L'invention apporte une solution qui ne présente pas les inconvénients décrits plus haut, en proposant un procédé de commande d'un pointeur permettant de lui attribuer une position qui ne coïncide pas avec la position de l'extrémité du membre qui détermine la position du pointeur sur l'écran tactile.

### 4. Exposé de l'invention

En effet, selon un aspect fonctionnel, l'invention concerne un procédé conforme au paragraphe introductif, caractérisé en ce qu'il inclut une étape de réglage d'une direction et d'une distance de déport et une étape d'insertion dudit déport entre la position du pointeur et celle de ladite extrémité.

L'invention permet d'éviter que l'extrémité d'un membre servant à piloter des déplacements d'un pointeur n'ait à recouvrir un objet affiché à l'écran pour effectivement sélectionner ledit objet. De plus, le pointeur pouvant revêtir tous types de formes (croix, flèche, etc.) permettant de matérialiser un point (centre de la croix, pointe de la flèche, etc.), il offrira une précision de pointage bien supérieure à celle offerte par l'extrémité d'un doigt.

L'étape de réglage de la direction et de la distance de déport permet à un utilisateur de configurer le déport de sorte que le pilotage du pointeur lui paraisse aussi naturel que possible, et offre donc à l'utilisateur une ergonomie personnalisée qui permet de minimiser le risque d'erreur de sélection.

Selon un mode de mise en œuvre particulier de l'invention, l'étape de réglage inclut une étape de mesure d'une variation d'une distance séparant deux doigts simultanément présents sur l'écran tactile.

Selon un autre mode de mise en œuvre particulier non couvert par l'invention revendiquée, qui pourra avantageusement être utilisé en combinaison avec le précédent, l'étape de réglage inclut une étape de mesure d'un angle entre un premier segment de droite reliant les extrémités de deux doigts dont une présence simultanée sur l'écran tactile est détectée, et un deuxième segment de droite reliant les extrémités desdits doigts après que l'un deux se soit vu imprimer un mouvement de rotation par rapport à l'autre.

Selon encore un autre mode de mise en œuvre particulier de l'invention, qui pourra avantageusement être utilisé en combinaison avec les précédents, l'étape de réglage inclut une étape de détection d'un mouvement dans une direction commune de trois doigts dont une présence simultanée sur l'écran tactile est détectée et une étape d'attribution de ladite direction commune à la direction de déport.

Selon un mode de mise en œuvre spécifique, ladite direction commune sera avantageusement une direction essentiellement cardinale. Il sera ainsi possible de programmer à l'avance quatre configurations potentielles du pointeur, la sélection de la configuration la plus pertinente étant réalisée en choisissant celle des directions cardinales dont la direction commune est la plus proche.

Les trois modes de mise en œuvre décrits ci-dessus permettent de régler une distance et une direction de déport sans nécessiter de moyens matériels autres que l'écran tactile lui-même. Seule sera requise une programmation particulière de moyens de traitement des informations produites par l'écran tactile pour que la détection d'une présence simultanée de deux doigts à l'écran déclenche une exécution de l'étape de réglage.

Selon un mode de mise en œuvre particulièrement avantageux non couvert par l'invention revendiquée, un procédé tel que décrit plus haut inclut une étape d'activation d'une commande relative à une zone au-dessus de laquelle le pointeur est maintenu en position au moyen d'un premier doigt placé en contact avec l'écran tactile, ladite étape d'activation incluant une étape de détection d'au moins une entrée en contact d'un deuxième doigt avec une surface dite d'impact de l'écran tactile , la nature de la commande à activer étant fonction de la position de la surface d'impact par rapport à la surface de contact du premier doigt avec l'écran tactile.

Un tel mode de mise en œuvre tire parti de la nature tactile de l'écran pour permettre la saisie d'une commande sans qu'aucun moyen matériel supplémentaire ne soit requis à cet effet. L'entrée en contact avec l'écran du deuxième doigt dont la détection provoquera l'activation de la commande pourra être unique ou multiple, pour émuler par exemple les commandes de type « simple clic » ou « double clic » connues des utilisateurs d'ordinateurs personnels.

En particulier :
- lorsque la surface d'impact est éloignée de la surface de contact d'une distance appréciée dans une première direction, ladite commande est une commande de début d'exécution d'un programme auquel est associée une icône au-dessus de laquelle le pointeur est maintenu en position au moyen du premier doigt, et
- lorsque la surface d'impact est éloignée de la surface de contact d'une distance appréciée dans une deuxième direction sensiblement opposée à la première direction, ladite commande est une commande d'affichage d'un menu contextuel relatif à un objet affiché dans la zone au-dessus de laquelle le pointeur est maintenu en position au moyen du premier doigt.

Ce mode de mise en œuvre permet d'offrir des fonctionnalités semblables à celles qui sont bien connues des utilisateurs de souris pour ordinateurs sous le nom de « clic gauche » et « clic droit » , et présente donc une ergonomie optimale.

Selon une variante non couverte par l'invention revendiquée, un procédé conforme au paragraphe introductif est caractérisé en ce qu'il inclut une étape de détection d'une présence simultanée de deux doigts sur l'écran tactile, l'étape d'insertion d'un déport étant alors réalisée par attribution au pointeur d'une position médiane entre les surfaces de contacts desdits doigts avec l'écran.

Cette variante est remarquable par sa simplicité et autorise un réglage très intuitif et donc très rapide du déport.

Selon un mode de mise en œuvre particulier de cette variante, le procédé décrit ci-dessus inclut une étape d'activation d'une commande relative à une zone au-dessus de laquelle le pointeur est maintenu en position, ladite étape d'activation incluant une étape de détection d'au moins une entrée en contact d'un troisième doigt avec la surface de l'écran.

Dans un tel mode de mise en œuvre, la position du point de contact du troisième doigt par rapport à l'image qui est affichée à l'écran est inopérante, car la détection porte sur l'entrée en contact du troisième doigt avec l'écran lui-même, quel que soit l'endroit où ce contact se produit, pourvu qu'il ait lieu alors que les deux premiers doigts sont maintenus en contact avec l'écran pour positionner le pointeur au-dessus de l'objet à activer.

Selon un aspect matériel, l'invention concerne un terminal de paiement incluant un écran tactile et des moyens d'affichage d'un pointeur ayant une position déterminée par la position d'une extrémité d'un membre sur ledit écran tactile, terminal caractérisé en ce qu'il inclut des moyens de réglage d'une direction et d'une distance de déport et des moyens d'insertion d'un déport entre la position du pointeur et celle de ladite extrémité, caractérisé en ce que lesdits moyens de réglage incluent des moyens figurant dans le groupe suivant :
- des moyens de mesure d'une variation d'une distance séparant deux doigts simultanément présents sur l'écran tactile ;
- des moyens de mesure d'un angle entre un premier segment de droite reliant les extrémités de deux doigts dont une présence simultanée sur l'écran tactile est détectée et un deuxième segment de droite reliant les extrémités desdits doigts après que l'un deux se soit vu imprimer un mouvement de rotation par rapport à l'autre ;
- des moyens de détection d'un mouvement dans une direction commune de trois doigts dont une présence simultanée sur l'écran tactile est détectée et une étape d'attribution de ladite direction commune à la direction de déport; ou
- des moyens de détection d'une présence simultanée de deux doigts sur l'écran tactile, l'étape d'insertion d'un déport étant alors réalisée par attribution au pointeur d'une position médiane entre les surfaces de contacts desdits doigts avec l'écran..

Selon encore un autre aspect matériel, l'invention concerne également, en tant que moyen utile à sa mise en œuvre, un programme d'ordinateur caractérisé en ce qu'il comprend des instructions de code de programme pour la mise en œuvre d'un procédé tel que décrit plus haut lorsque ce programme est exécuté par un processeur.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la **FIG.1** est un diagramme fonctionnel qui représente un système de communication dans lequel l'invention est mise en œuvre ;
- la **FIG.2** est une vue en perspective qui illustre le fonctionnement de l'invention ;
- les **FIGs. 3** et **4** sont des vues en perspective qui illustrent l'exécution d'un mode de réglage de distance de déport ;
- les **FIGs. 5, 6****,** **7** et **8** sont des vues en perspective qui illustrent l'exécution d'un premier mode de réglage de direction de déport selon un exemple non couvert par l'invention revendiquée ;
- les **FIGs. 9, 10****,** **11** et **12** sont des vues en perspective qui illustrent l'exécution d'un deuxième mode de réglage de direction de déport ;
- la **FIG.13** est une vue en perspective qui illustre l'exécution d'une étape d'activation d'une commande d'un premier type selon un exemple non couvert par l'invention revendiquée ;
- la **FIG.14** est une vue en perspective qui illustre l'exécution d'une étape d'activation d'une commande d'un deuxième type selon un exemple non couvert par l'invention revendiquée ; et
- les **FIGs. 15** et **16** sont des vues en perspective qui illustrent le fonctionnement de l'invention selon une variante de réalisation, la FIG. 16 correspondant à un exemple non couvert par l'invention revendiquée.

### 6. Description d'un mode de réalisation de l'invention

### 6.1 Principe général

Le principe général de l'invention repose sur un réglage d'une direction et d'une distance de déport et sur une insertion dudit déport entre la position du pointeur et celle de l'extrémité d'un membre servant à piloter les déplacements du pointeur afin que ladite extrémité n'ait pas à recouvrir un objet affiché à l'écran pour effectivement sélectionner cet objet.

### 6.2 Description d'un mode de réalisation

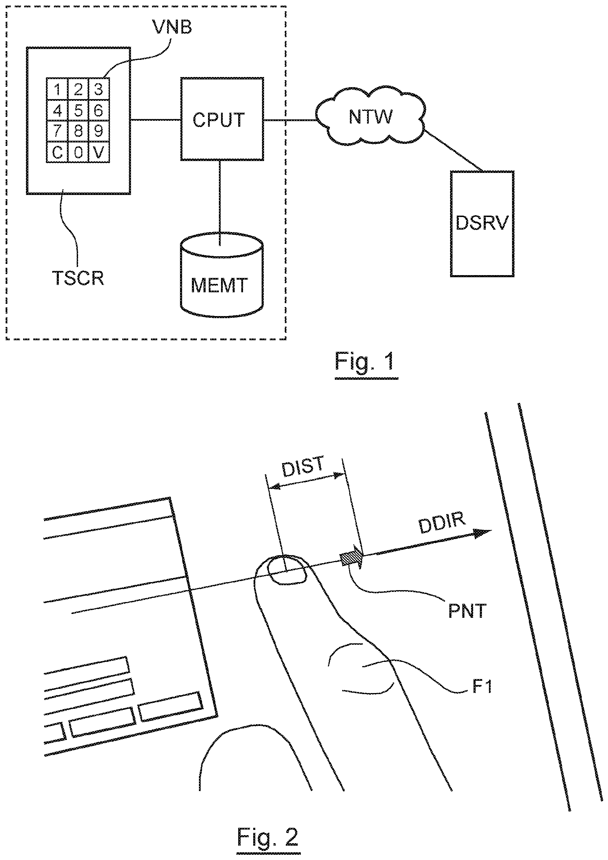

La **FIG.1** représente un système de communication SYST dans lequel l'invention est mise en œuvre. Ce système SYST inclut un terminal RPT destiné à communiquer avec au moins un serveur distant DSRV par l'intermédiaire d'un réseau de communication NTW, par exemple un réseau conforme à un protocole de type Internet. Dans une application particulièrement avantageuse de l'invention, le terminal RPT est un terminal de paiement tandis que le serveur distant appartient à un organisme bancaire et est destiné à enregistrer une transaction définie et ordonnée par le terminal de paiement RTP.

Le terminal RTP est muni d'un écran tactile TSCR, notamment apte à afficher un pavé numérique virtuel VNB, et connecté à un processeur de traitement CPUT lui-même relié à une mémoire MEMT. Au cours d'une phase d'initialisation, le processeur de traitement CPUT interrogera la mémoire MEMT aux fins de charger dans une mémoire interne audit processeur CPUT un programme incluant des instructions qui, lorsqu'elles seront exécutées par ledit processeur CPUT, permettront la mise en oeuvre du procédé selon l'invention.

En particulier, une fois cette initialisation réalisée, le dispositif RPT sera apte à procéder à l'insertion d'un déport entre la position d'un pointeur affiché sur l'écran VNB et celle d'une extrémité d'un membre de l'utilisateur destinée à piloter des déplacements dudit pointeur lorsque cette extrémité est en contact avec l'écran.

La **FIG.2** illustre un premier mode de mise en œuvre de l'invention, dans lequel le pointeur PNT est matérialisé par une flèche, ses déplacements étant destinés à être pilotés par déplacement de l'extrémité d'un doigt F1 placé en contact avec l'écran tactile TSCR. Dans ce premier mode de mise en œuvre de l'invention, l'insertion d'un déport entre le pointeur PNT et l'extrémité du doigt F1 est réalisée par réglage d'une distance DIST et d'une direction de déport DDIR entre la position du pointeur affiché sur l'écran TSCR et celle de l'extrémité du doigt D1.

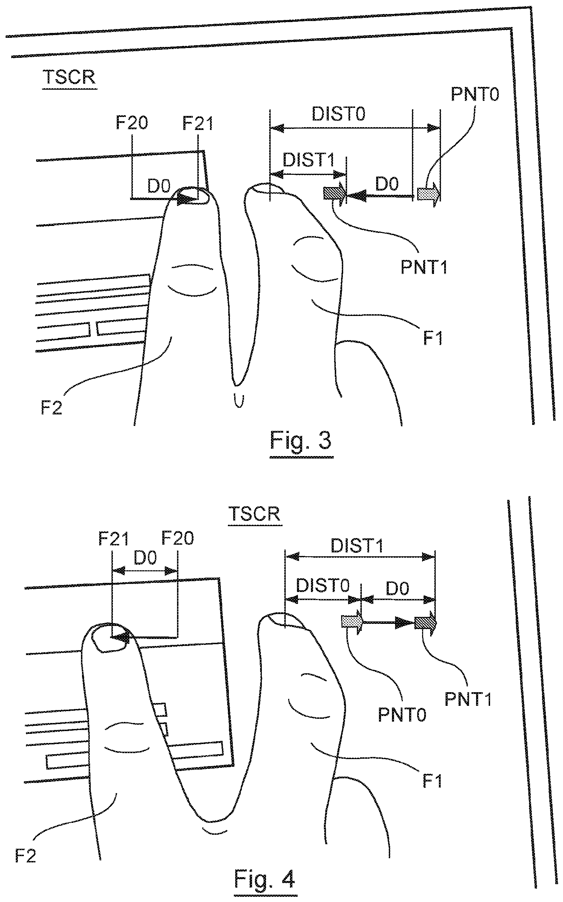

Les **FIGs.3** et **4** illustrent l'exécution d'une étape de réglage de la distance de déport DIST. Dans les deux cas représentés ici, après que le dispositif ait été placé en un mode de fonctionnement dit mode de réglage, une variation de distance D0 séparant deux doigts F1 et F2 simultanément présents sur l'écran tactile TSCR est mesurée, cette variation de distance étant ensuite dans cet exemple soustraite à une distance initiale de déport DISTO pour produire une nouvelle distance de déport DIST1.

Dans le cas illustré par la **FIG.3****,** l'utilisateur a dans un premier temps placé simultanément des premier et deuxième doigts F1 et F2, en l'espèce son majeur et son index, respectivement, en contact avec l'écran tactile TSCR. L'utilisateur a ensuite déplacé son index vers la droite, le rapprochant ainsi de son majeur. En conséquence, la variation de distance D0 entre l'index et le majeur est considérée comme positive puisque le déplacement a été opéré dans le sens de la direction de déport évoquée plus haut. Sa soustraction à la distance de déport initiale DISTO provoquera donc une réduction de la distance de déport DIST1, le pointeur passant alors d'une position PNT0 à une position PNT1 plus proche de l'extrémité du doigt F1.

Dans le cas illustré par la **FIG.4****,** l'utilisateur a dans un premier temps placé simultanément des premier et deuxième doigts, en l'espèce son majeur et son index, respectivement, en contact avec l'écran tactile TSCR. L'utilisateur a ensuite déplacé son index vers la droite, l'écartant ainsi de son majeur. En conséquence, la variation de distance D0 entre l'index et le majeur est considérée comme négative puisque le déplacement a été opéré dans un sens opposé à la direction de déport évoquée plus haut. Sa soustraction à la distance de déport initiale DISTO provoquera donc une augmentation de la distance de déport DIST1, le pointeur passant alors d'une position PNT0 à une position PNT1 plus éloignée de l'extrémité du doigt F1..

Le mode de réglage de la distance de déport illustré par les **FIGs.3** et **4** est ainsi très intuitif et donc particulièrement ergonomique, puisqu'une réduction de l'écart séparant les premier et deuxième doigts Flet F2 provoque une augmentation de réduction de la distance de déport tandis qu'une augmentation de l'écart séparant les premier et deuxième doigts Flet F2 provoque une augmentation de la distance de déport.

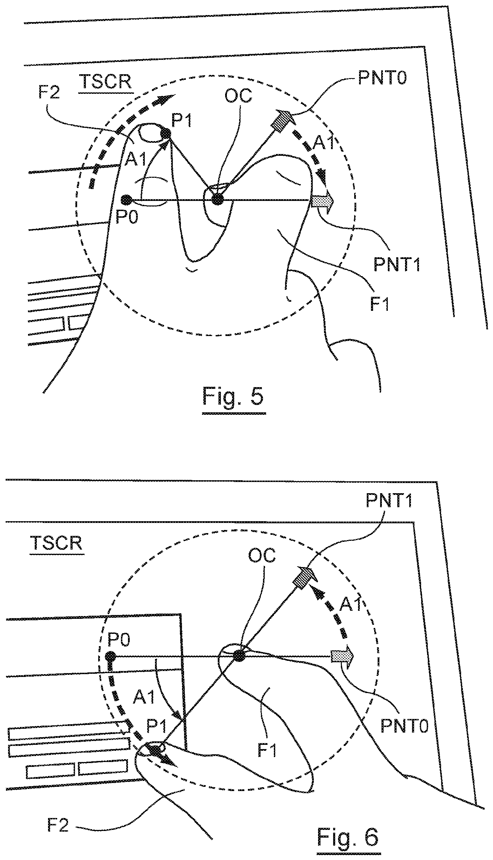

Les **FIGs. 5, 6****,** **7** et **8** sont des vues en perspective qui illustrent une exécution non couverte par l'invention revendiquée, d'un premier mode de réglage de direction de déport, qui prévoit une mesure d'un angle entre un premier segment de droite [OC ; P0] liant les extrémités de deux doigts dont une présence simultanée sur l'écran tactile est détectée et un deuxième segment de droite [OC ; P1] reliant les extrémités desdits doigts après que l'un deux se soit vu imprimer un mouvement de rotation par rapport à l'autre.

Les **FIGs.5** et **6** illustrent chacune un cas où les doigts utilisés pour le réglage de la direction de déport sont le majeur F1 et l'index F2 de l'utilisateur. Dans chacun des cas illustrés ici, l'utilisateur a dans un premier temps placé simultanément son majeur F1 et son index F2 en contact avec l'écran tactile TSCR en des positions respectivement notées OC et P0. L'utilisateur a ensuite fait pivoter son index F2 par rapport à son majeur F1 pour l'amener à occuper une position P1, la position OC du majeur restant inchangée. Ce mouvement aura permis de définir un angle A1 entre un premier segment de droite [OC ; P0] reliant l'extrémité du majeur F1 et à celle de l'index F2 dans sa position initiale P0, et un deuxième segment de droite [OC ; P1] reliant l'extrémité du majeur F1 et à celle de l'index F2 dans sa position d'arrivée P1. Cet angle A1 a ensuite été ajouté à celui qui définissait précédemment la direction de déport du pointeur PNT0, la direction de déport étant ainsi modifiée comme le montre la nouvelle orientation du pointeur PNT1 résultant de ce réglage.

Comme le montrent respectivement les **FIGs.5** et **6****,** une rotation dans le sens horaire de l'index par rapport au majeur provoque une rotation dans le sens horaire de la direction de déport, tandis qu'une rotation dans le sens antihoraire de l'index par rapport au majeur provoque une rotation dans le sens antihoraire de la direction de déport, ce qui rend ce mode de réglage de la direction de déport très intuitif et ergonomique.

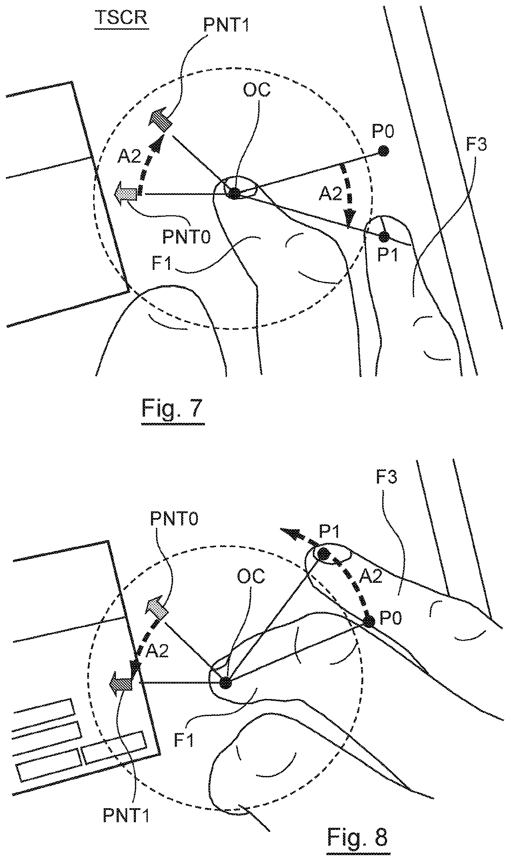

Les **FIGs.7** et **8** illustrent chacune un cas où les doigts utilisés pour le réglage de la direction de déport sont le majeur F1 et l'annulaire F3 de l'utilisateur. Dans chacun des cas illustrés ici, l'utilisateur a dans un premier temps placé simultanément son majeur F1 et son annulaire F3 en contact avec l'écran tactile TSCR en des positions respectivement notées OC et P0. L'utilisateur a ensuite fait pivoter son annulaire F3 par rapport à son majeur F1 pour l'amener à occuper une position P1, la position OC du majeur restant inchangée. Ce mouvement aura permis de définir un angle A2 entre un premier segment de droite [OC ; P0] reliant l'extrémité du majeur F1 et à celle de l'annulaire F3 dans sa position initiale P0, et un deuxième segment de droite [OC ; P1] reliant l'extrémité du majeur F1 et à celle de l'annulaire F3 dans sa position d'arrivée P1. Cet angle A2 a ensuite été ajouté à celui qui définissait précédemment la direction de déport du pointeur PNT0, la direction de déport étant ainsi modifiée comme le montre la nouvelle orientation du pointeur PNT1 résultant de ce réglage.

Comme le montrent respectivement les **FIGs.7** et **8****,** une rotation dans le sens horaire de l'annulaire par rapport au majeur provoque une rotation dans le sens horaire de la direction de déport, tandis qu'une rotation dans le sens antihoraire de l'annulaire par rapport au majeur provoque une rotation dans le sens antihoraire de la direction de déport, ce qui rend ce mode de réglage de la direction de déport également très intuitif et ergonomique.

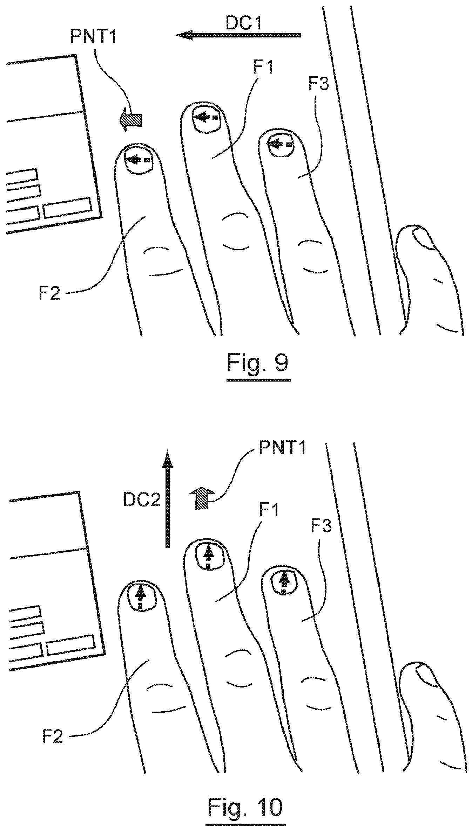

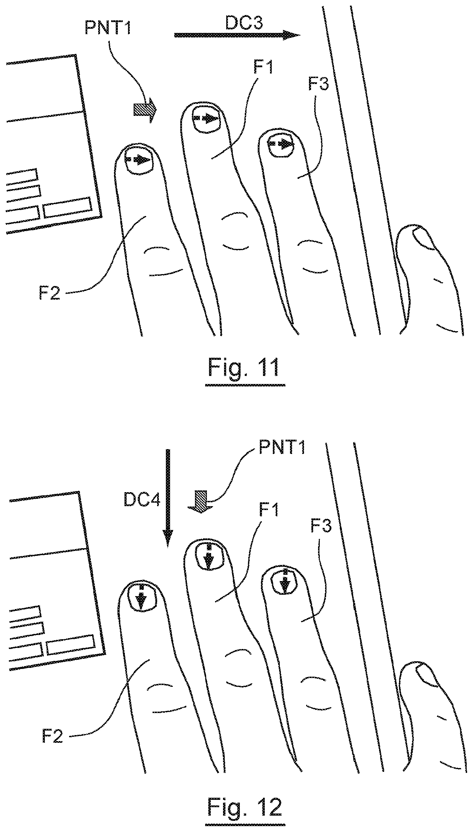

Les **FIGs. 9, 10****,** **11** et **12** sont des vues en perspective qui illustrent chacune l'exécution d'un deuxième mode de réglage de direction de déport, qui prévoit une détection d'un mouvement dans une direction commune de trois doigts F1, F2 et F3 dont une présence simultanée sur l'écran tactile est détectée et une étape d'attribution de ladite direction commune à la direction de déport imprimée au pointeur PNT1.

Dans le mode de mise en œuvre spécifique représenté par les **FIGs. 9, 10****,** **11** et **12****,** la direction à imprimer au pointeur PNT1 est une direction essentiellement cardinale DC1, DC2, DC3 ou DC4, respectivement. Il est ainsi possible de programmer à l'avance quatre configurations potentielles du pointeur PNT1, la sélection de la configuration la plus pertinente étant réalisée en choisissant celle des directions cardinales DC1, DC2, DC3 ou DC4 dont la direction de mouvement commune aux trois doigtsF1, F2 et F3 est la plus proche.

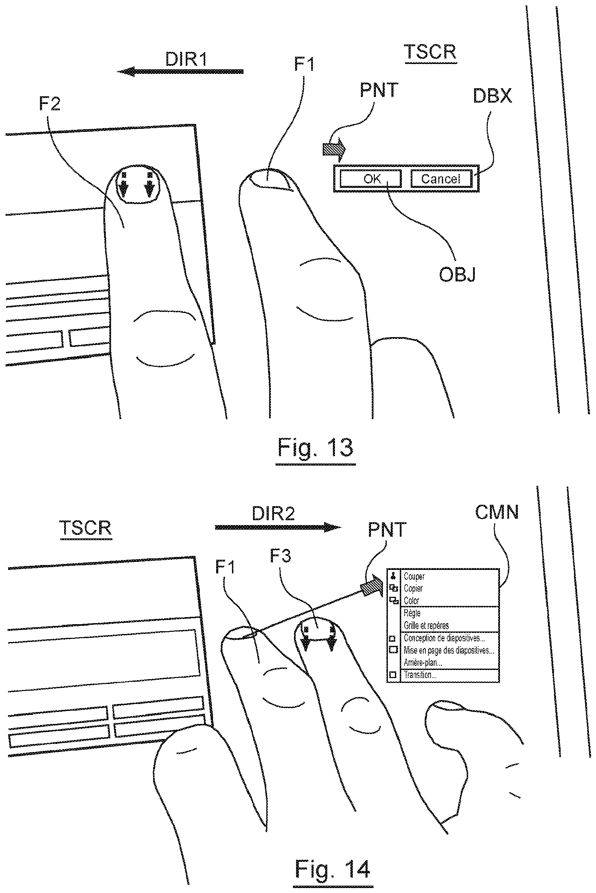

Les **FIG.13** et **14** sont des vues en perspective qui illustrent chacune une exécution, non couverte par l'invention revendiquée, d'une étape d'activation d'une commande relative à une zone de l'écran tactile TSCR représentant un objet OBJ au-dessus duquel le pointeur PNT est maintenu en position au moyen d'un premier doigt F1 placé en contact avec l'écran tactile TSCR, alors que le dispositif conforme à l'invention se trouve en un mode de fonctionnement opérationnel.

Dans les cas illustrés par les **FIGs.13** et **14****,** l'étape d'activation inclut une étape de détection d'au moins une entrée en contact d'un deuxième doigt F2 ou F3 avec une surface dite d'impact de l'écran tactile TSCR, ce contact passager étant représenté graphiquement sous la forme de deux flèches verticales tracées en pointillés. Dans les modes de mise en œuvre illustrés ici, la nature de la commande à activer est fonction de la position de la surface d'impact par rapport à la surface de contact du premier doigt F1 avec l'écran tactile TSCR.

La **FIG.13** illustre un cas où la surface d'impact est éloignée de la surface de contact d'une distance appréciée dans une première direction DIR1, auquel cas la commande à activer est une commande de début d'exécution d'un programme auquel est associée une icône au-dessus de laquelle le pointeur est maintenu en position au moyen du premier doigt, en l'espèce un bouton « OK » d'une boîte de dialogue DBX.

La **FIG.14** illustre un cas où la surface d'impact est éloignée de la surface de contact d'une distance appréciée dans une deuxième direction DIR2 sensiblement opposée à la première direction DIR1, auquel cas la commande à activer est une commande d'affichage d'un menu contextuel CMN relatif à un objet affiché dans la zone au-dessus de laquelle le pointeur PNT était maintenu en position au moyen du premier doigt F1. L'utilisateur pourra alors, en maintenant son doigt F3 en contact avec l'écran TSCR, faire évoluer le pointeur PNT dans le menu contextuel au moyen du premier doigt F1 en vue d'opérer une sélection de l'une des options offertes par ce menu contextuel CMN.

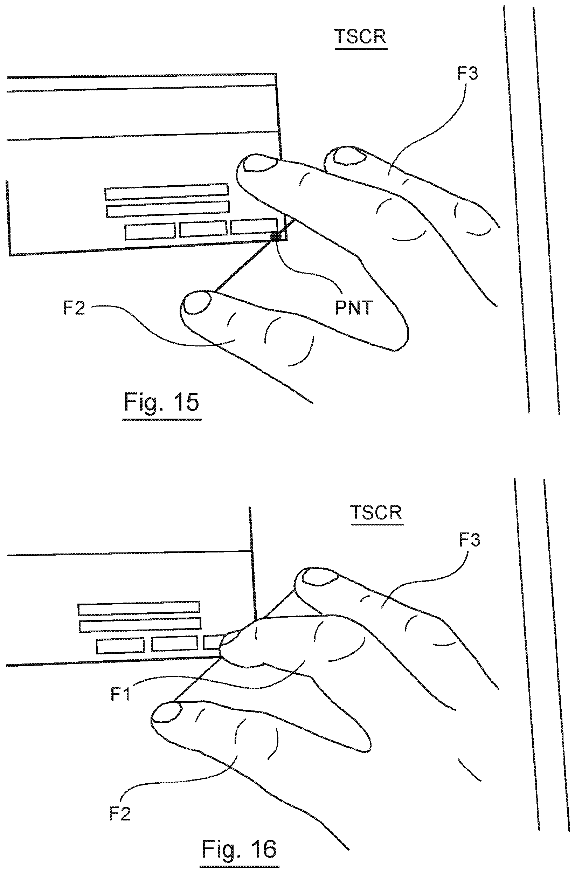

La **FIG. 15** illustre une variante de réalisation non couverte par l'invention revendiquée, qui prévoit une étape de détection d'une présence simultanée de deux doigts F2 et F3, ici respectivement l'index et l'annulaire d'une même main, sur l'écran tactile TSCR, l'étape d'insertion d'un déport étant alors réalisée par attribution au pointeur PNT d'une position médiane entre les surfaces de contacts desdits doigts F2 et F3 avec l'écran TSCR.

Cette variante est remarquable par sa simplicité et autorise un réglage très intuitif et donc très rapide du déport.

La **FIG. 16** illustre un mode de mise en œuvre particulier de cette variante non couverte par l'invention revendiquée, qui inclut une étape d'activation d'une commande relative à une zone au-dessus de laquelle le pointeur est maintenu en position, ladite étape d'activation incluant une étape de détection d'au moins une entrée en contact d'un troisième doigt F1 avec la surface de l'écran TSCR.

Dans un tel mode de mise en œuvre, la position du point de contact du troisième doigt F1 par rapport à l'image qui est affichée à l'écran est inopérante, car la détection porte sur l'entrée en contact du troisième doigt avec l'écran lui-même, quel que soit l'endroit où ce contact se produit, pourvu qu'il ait lieu alors que les deux premiers doigts sont maintenus en contact avec l'écran pour positionner le pointeur au-dessus de l'objet à activer.

Ainsi, bien que dans la situation illustrée ici, l'index F2 et l'annulaire F3 définissent ensemble la position du pointeur, tandis que le troisième doigt F1 dont l'entrée en contact avec l'écran est détectée est le majeur, dans d'autres situations, le doigt dont l'entrée en contact avec l'écran sera détectée pourra être le pouce ou encore l'annulaire, voire un doigt d'une autre main, laissant ainsi le pointeur totalement découvert et donc apparent pendant l'exécution de l'étape d'activation.

L'entrée en contact avec l'écran du troisième doigt dont la détection provoquera l'activation de la commande pourra être unique ou multiple, pour émuler par exemple les commandes de type « simple clic » ou « double clic » connues des utilisateurs d'ordinateurs personnels.

## Revendications

1. Procédé de commande d'un pointeur (PNT) ayant une position déterminée par la position d'une extrémité d'un membre sur un écran tactile d'un dispositif, le procédé comprenant :
- une étape d'insertion d'un déport entre la position du pointeur et la position de ladite extrémité,
- lorsque le dispositif est placé dans un mode de fonctionnement dit premier mode de réglage, une étape de réglage d'une distance (DIST) de déport par mesure d'une variation de distance séparant deux doigts (F1, F2) simultanément présents sur l'écran tactile, la distance de déport étant réglée en fonction de ladite variation de distance mesurée,
le procédé étant **caractérisé en ce qu'**il comprend :
- lorsque le dispositif est placé dans un mode de fonctionnement dit deuxième mode de réglage, une étape de réglage d'une direction (DDIR) de déport par détection d'un mouvement de trois doigts dans une direction commune essentiellement cardinale, la direction de déport étant réglée en fonction de ladite direction commune.

2. Programme d'ordinateur **caractérisé en ce qu'**il comprend des instructions de code de programme pour la mise en œuvre du procédé selon la revendication 1 lorsque ce programme est exécuté par un processeur.

3. Terminal de paiement incluant un écran tactile et des moyens d'affichage d'un pointeur (PNT) ayant une position déterminée par la position d'une extrémité d'un membre sur ledit écran tactile, le terminal comprenant :
- des moyens d'insertion d'un déport entre la position du pointeur et la position de ladite extrémité,
- des moyens de réglage d'une distance (DIST) de déport tenant compte d'une mesure d'une variation de distance séparant deux doigts (F1, F2) simultanément présents sur l'écran tactile, les dits moyens de réglage étant activés lorsque le dispositif est placé dans un mode de fonctionnement dit premier mode de réglage;
le terminal étant **caractérisé en ce qu'**il comprend :
- des moyens de réglage d'une direction (DDIR) de déport tenant compte d'un mouvement de trois doigts détecté dans une direction commune essentiellement cardinale, les dits moyens de réglage étant activés lorsque le dispositif est placé dans un mode de fonctionnement dit deuxième mode de réglage.

## Patentansprüche

1. Verfahren zum Steuern eines Zeigers (PNT), der eine Position aufweist, die durch die Position eines Endes eines Gliedes auf einem Touchscreen einer Vorrichtung bestimmt wird, wobei das Verfahren aufweist:
- einen Schritt des Einfügens eines Versatzes zwischen der Position des Zeigers und der Position des Endes,
- wenn die Vorrichtung in einen Betriebsmodus gebracht wird, der erster Einstellmodus genannt wird, einen Schritt des Einstellens eines Versatzabstands (DIST) durch Messen einer Abstandsänderung zwischen zwei Fingern (F1, F2), die gleichzeitig auf dem Touchscreen vorhanden sind, wobei der Versatzabstand in Abhängigkeit von der gemessenen Abstandsänderung eingestellt wird,
wobei das Verfahren **dadurch gekennzeichnet ist, dass** es aufweist:
- wenn die Vorrichtung in einen Betriebsmodus gebracht wird, der zweiter Einstellmodus genannt wird, einen Schritt des Einstellens einer Versatzrichtung (DDIR) durch Erfassen einer Bewegung von drei Fingern in eine gemeinsame Richtung, die im Wesentlichen eine Kardinalrichtung ist, wobei die Versatzrichtung in Abhängigkeit von der gemeinsamen Richtung eingestellt wird.

2. Computerprogramm, **dadurch gekennzeichnet, dass** es Programmcodebefehle für das Umsetzen des Verfahrens nach Anspruch 1 aufweist, wenn das Programm von einem Prozessor ausgeführt wird.

3. Zahlungsendgerät, umfassend einen Touchscreen und Mittel zum Anzeigen eines Zeigers (PNT), der eine Position aufweist, die durch die Position eines Endes eines Gliedes auf einem Touchscreen bestimmt wird, wobei das Endgerät aufweist:
- Mittel zum Einfügen eines Versatzes zwischen der Position des Zeigers und der Position des Endes,
- Mittel zum Einstellen eines Versatzabstands (DIST) unter Berücksichtigung einer Messung einer Abstandsänderung zwischen zwei Fingern (Fl, F2), die gleichzeitig auf dem Touchscreen vorhanden sind, wobei die Mittel zum Einstellen aktiviert werden, wenn die Vorrichtung in einen Betriebsmodus gebracht wird, der erster Einstellmodus genannt wird,
wobei das Endgerät **dadurch gekennzeichnet ist, dass** es aufweist:
- Mittel zum Einstellen einer Versatzrichtung (DDIR) unter Berücksichtigung einer erfassten Bewegung von drei Fingern in eine gemeinsame Richtung, die im Wesentlichen eine Kardinalrichtung ist, wobei die Mittel zum Einstellen aktiviert werden, wenn die Vorrichtung in einen Betriebsmodus gebracht wird, der zweiter Einstellmodus genannt wird.

## Claims

1. Method for controlling a pointer (PNT) having a position determined by the position of at least one end of a limb on a touch screen of a device, the method comprising:
- a step for inserting an offset between the position of the pointer and the position of said end,
- when the device is in an operating mode called first adjusting mode, a step of adjusting an offset distance (DIST) by measuring a variation of a distance between two fingers (F1, F2) simultaneously present on the touch screen, the offset distance being adjusted as a function of said measured distance variation;
said method being **characterized in that** it comprises:
- when the device is in an operating mode called second adjusting mode, a step of adjusting an offset direction (DDIR) by detecting a motion of three fingers in a common direction, said common direction being essentially cardinal, the offset direction being adjusted as a function of said common direction.

2. Computer program **characterized in that** it comprises program code instructions for implementing a method according to any one of claim 1, when this program is executed by a processor.

3. Payment terminal including a touch screen and means for displaying a pointer (PNT) having a position determined by the position of one end of a limb on said touch screen, the terminal comprising:
- means for inserting an offset between the position of the pointer and the position of said end;
- means for adjusting an offset distance (DIST) taking into account of a variation of a distance between two fingers (F1, F2) simultaneously present on the touch screen, said means for adjusting being activated when the device is in an operating mode called first adjusting mode;
the terminal being **characterized in that** it comprises:
- means for adjusting a offset direction (DDIR) taking into account of a motion of three fingers in a common direction, said common direction being essentially cardinal, said means for adjusting being activated when the device is in an operating mode called second adjusting mode.
